# EUROPEAN PATENT SPECIFICATION

(11) **EP 0 956 128 B1**
(45) Date of publication and mention of the grant of the patent: **26.06.2002**
(21) Application number: 96935597.3
(22) Date of filing: 11.11.1996
(51) Int. Cl.: B01D 27/08, F16J 15/02

(54) **SEALING OF A CYLINDRICAL FILTER ELEMENT WITHIN A CHAMBER IN A HOUSING OF A MACHINE**
ABDICHTUNG EINES ZYLINDRISCHEN FILTERELEMENTES IN DER KAMMER EINES MASCHINENGEHAEUSES
SCELLEMENT D'UN ELEMENT FILTRANT CYLINDRIQUE A L'INTERIEUR D'UNE CHAMBRE D'UN CARTER DE MACHINE

(30) Priority: 23.11.1995 NL 1001729
(43) Date of publication of application: 17.11.1999
(73) Proprietor: Parker Filtration B.V., 6802 EA Arnhem (NL)
(72) Inventor: ENGELANDER, Pieter, NL-3903 CT Veenendaal (NL)
(74) Representative: Boelsma, Gerben Harm, Ir.
(86) International application number: NL9600440
(87) International publication number: WO9718882

(56) References cited:
- WO-A-88/05333
- DE-U- 9 014 523

## Description

The invention relates to the sealing of a substantially annular cylindrical filter element within a chamber, that is integrated in the housing of a machine and comprises a bottom with an inlet or outlet at one end and is closed by a cover at the opposite end, an annular collecting and distribution space being provided between the cylindrical outer face of the filter element and the circumferential wall of the chamber, said space being connected to an outlet or inlet opening and being sealed against fluid leakage via the axial ends of the filter element by means of sealing rings, which are received in grooves formed in a metallic ring-shaped end cap and a metallic bottom end cap of the filter element.

Placing filter elements in filter chambers, which are integrated in the housing of machines that have to be provided with filter elements, especially occurs with heavy machines, such as heavy diesel engines. An advantage of such placing as compared with the placement in separate housings is to be seen in that separate connecting pipes are avoided.

The usual way of sealing filter elements in such integrated chambers involves the use of a metallic annular end cap and a metallic bottom end cap for the filter element which are both provided with a circumferential groove for receiving an O-ring. These O-rings are each adapted to sealingly engage a cylindrical circumferential area of the chamber wall, said circumferential areas being located adjacent the chamber bottom and adjacent the (de)mounting opening of the chamber respectively, the latter opening being adapted to be closed by the cover.

For placement and removal of a filter element use is made of a special mounting rod, that is coaxially "stuck" onto the filter element.

As rather heavy filter elements are involved here, the diameter of which may e.g. be in the order of 200 mm and the length of which may e.g. be 500 mm and more, placement of such filter element (by hand) is a heavy job, whereby especially the downstream O-ring may easily and locally rub the chamber wall to such an extent, that the sealing effect of it is affected and that in practice the filter element cannot properly fulfil its function.

Furthermore with the usual structures means are provided to compensate for differences in length, said means being formed by a metallic spring member, that is provided between the cover and the upstream bottom of the filter element so as to be compressed more or less when tightening the filter cover.

The invention aims at improving the well-known sealing structure above referred to and more particularly avoiding the risk of affecting the sealing effect of the sealing structure when placing the filter element.

According to the invention this aim is achieved in that the receiving groove in the downstream ring-shaped end cap of the filter element is positioned radially inwardly relative to the circumferential surface of the filter element and that the respective downstream sealing ring is, as seen in cross-section, a substantially V-shaped elastic ring, that has its apex directed radially outwardly and has (the inner end) of its upstream leg received in said groove, whereas the free, axially widened end of the free, axially resilient leg is bearing against the bottom surface of the chamber.

The terms "downstream" and "upstream" are to be understood as related to the direction in which the filter element is inserted.

It is in fact the axially widened leg end of the V-shaped sealing ring that effects the required sealing. The sealing leg end is taking such a position, that damage caused by a rubbing contact with the chamber wall during placement of the filter element may be considered as excluded. The elasticity of the sealing element and the local overpressure in the fluid to be filtered will cause the sealing leg end to extend from the filter element in the axial direction to an extent that corresponds with the difference in length between the chamber and the filter element as compared to a nominal measure. Consequently the use of separate spring means for compensation of such differences in length has become superfluous.

It is to be noted that document DE-U 90 14 523 discloses a sealing assembly for sealing regions at a different pressure. The sealing assembly comprises a sealing ring of a cross-sectional shape which is different from the V-shaped elastic sealing ring of the present invention. More particularly the well-known sealing ring comprises twin sealing lips. The document fails to teach how to incorporate such a sealing ring into a specific filter assembly of the type above referred to, in order to overcome the problem of wear during insertion of the filter element.

Furthermore document WO-A 8805333 discloses a filter attached to a housing. The space between a top plate of the filter and the housing is sealed by an O-ring, that is provided with a mounting extension, received in an annular recess of said top plate. This document does neither disclose how to overcome the problem of wear during insertion of the filter element in a filter chamber, that makes part of a housing of a machine.

Further particulars of the structure according to the invention will be hereinafter further explained by way of example with reference to the accompanying drawing.
Fig. 1 is a longitudinal cross-section through a filter element according to the invention, positioned in a chamber that is integrally formed in the housing of a machine and
fig. 2 is a cross-sectional view through a part of the special sealing ring according to the invention.

With reference to the drawing 1 and 2 are the walls of a housing of a machine, such as the engine block of a combustion engine. The wall portion 1 and the wall portion 2 constitute the circumferential wall and the bottom respectively of a substantially cylindrical chamber. In this chamber there is provided a filter element 3, e.g. serving as an oil filter, that is held within the chamber by means of a cover 4. The filter element 3 is of a well-known type, comprising an annular cylindrical filter body 5 formed of pleated filtering material. In the example shown the filter body is supported by an outer, perforate metallic shell 6.

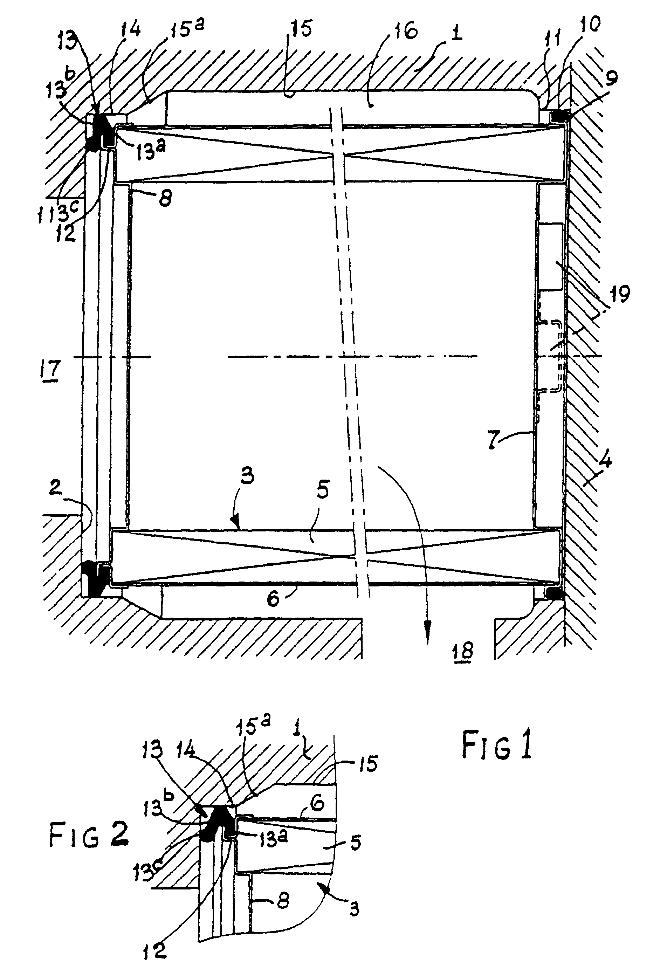

The filter body 5 and the metallic support shell 6 are, at the right-hand terminal edges as shown in fig. 1, sealingly embedded in an annularly deepened marginal area of a sheet metallic bottom indicated at 7. In a similar manner the filter body 5 and the metallic support shell 6 are sealingly received in the space between axially extending flanges of a ring-shaped metallic end cap 8 at the left-hand terminal ends as shown in fig. 1.

At the right-hand end of the filter element 3, as shown in the drawing, a groove for an O-ring 10 is formed circumferentially of the sheet metallic filter bottom 7 in a well-known manner, i.e. by means of a welded flat ring 9. The said O-ring is sealingly engaging a ring-shaped cylindrical wall section 11 of the chamber wall.

At the left-hand end of the filter element 3 a groove 12 is formed at the terminal end of the metallic ring 8, said groove being positioned radially inwardly relative to the metallic support shell 6. The latter groove functions to hold a special sealing ring 13 formed of rubber or similar material. This sealing ring has a substantially V-shaped cross-section, that has its flattened apex directed radially outwardly. The free end of the right-hand leg 13a of said sealing ring 13, that extends radially inwardly, is held in the groove 12, while the left-hand leg 13b has its axially extended end 13c sealingly engaging the chamber bottom 2.

The flattened apex of the sealing ring 13 engages a ring-shaped cylindrical wall section 14 of the chamber wall. The diameter of said wall section 14 is slightly smaller than that of the wall section 11.

The chamber is widened between the ring-shaped cylindrical wall sections 11 and 14, due to which an outlet/collecting space 16 for filtered fluid is formed between the widened chamber wall 15 and the outer surface of the filter element 3.

In the example shown the fluid (oil) to be filtered is supplied through an opening 17 in the chamber bottom 2 and then passed in the arrow direction through the filter element 3 outwardly towards the outlet collecting space 16, from which the filtered liquid is discharged via a discharge opening 18.

To insert the filter element 3 into the chamber, which has become accessible at the right-hand side by removing the cover 4, the filter element 3 is "stuck" in a well-known manner, by means of an "eyelet" 19 on the sheet metallic bottom 3, to a mounting rod. It will be understood that during insertion of the filter element 3 the sealing element 13c of the special sealing ring 13 will remain out of contact with the circumferential wall 11, 15, 14 of the chamber and that consequently it will be saved from being damaged through rubbing.

Admittedly, the (flattened) apex of the sealing ring 13 cooperating with the ring-shaped cylindrical wall section 14 is subjected to (slight) damaging due to a rubbing contact with the chamber wall; however, this part of the sealing ring has, in fact, only a guiding function. Moreover, the conical transition 15a of the widened chamber wall 15 towards the ring-shaped cylindrical wall section 14 will lead to a smooth centring of the filter element.

Tightening of the fastening bolts (not shown) of the cover 4 causes the sealing ring 13 to be compressed in the axial direction, due to which the downstream leg 13b (directed to the left as seen in the drawing) will become with its thickened, bead-like inner circumferential edge 13c elastically pressed against the bottom wall 2.

The extent to which the sealing ring 13 is compressed in the axial direction depends on the magnitude of the difference in length between the chamber and the filter element as compared with a nominal measure. Fig. 1 shows the case, in which the effective length of the chamber corresponds to a minimum value and the effective length of the filter element corresponds to a maximum value as compared with the nominal measures, so that in this case the sealing ring 13 is completely compressed.

Fig. 2, however, represents the case, in which the effective chamber length corresponds to the maximum value and the effective length of the filter element 3 corresponds to a minimum value, so that the sealing ring 13 is compressed to a minimum extent.

In both cases the pressure of the elastic leg 13b is increased by the overpressure at the upstream side of the filter element; in normal use, with a "fresh" filter element, this overpressure will amount to some tenths of a bar and may increase to a value of e.g. 1,5 bar in case the filter element has reached the state for replacement.

## Claims

1. Filter device suitable for use in a machine, comprising a chamber (1, 2, 11, 15) integrated in the housing of the machine, a substantially annular cylindrical filter element (3) within the chamber (1, 2, 11, 15), a chamber bottom (2) with an opening (17), a cover (4) closing the opposite end of the chamber to the chamber bottom, an annular collecting and distribution space (16) being provided between the cylindrical outer surface of the filter element (3) and the circumferential wall (1; 15) of the chamber, said space (16) being connected to a discharge opening (18) and being sealed against fluid leakage via the axial ends of the filter element by means of sealing rings (13 and 10), which are received in grooves formed in a metallic ring-shaped end cap (8) and a metallic bottom end cap (7) respectively of the filter element, **characterized in that** a receiving groove (12) in the downstream ring-shaped end cap (8) of the filter element (3) is positioned radially inwardly relative to the circumferential surface of the filter element (5) and that the respective downstream sealing ring (13) is, as seen in cross-section, a substantially V-shaped elastic ring, that has its apex directed radially outwardly, in contact with a ring-shaped wall section (14) of the chamber wall, and has the inner end of its upstream leg (13a) received in said groove (12), whereas the free end (13c) of a free, axially resilient leg (13b) is axially extended in the direction of the axis of the filter and is bearing against the bottom surface (2) of the chamber.

2. Filter device according to claim 1, **characterized in that** the apex of the V-shaped cross-section of the sealing ring (13) is flattened.

3. Filter device according to claims 1-2, **characterized in that** the axially extended end (13c) of the axially resilient leg (13b) is formed as a bead.

4. Filter device according to claims 1-3, **characterized in that** the diameter of said ring-shaped wall section (14), engaging said apex, is slightly smaller than that of a ring-shaped cylindrical chamber wall section (11) at the upstream end of the filter element (3), the latter wall section (11) cooperating with an O-ring (10).

5. Filter device according to claim 4, **characterized in that** the circumferential chamber wall is widened (at 15) between the two ring-shaped cylindrical chamber wall sections (14 and 11) and is connected to the ring-shaped cylindrical chamber wall section (14) at the downstream end of the filter element through a conical connecting wall portion (15a).

## Patentansprüche

1. Zur Verwendung in einer Maschine geeignete Filtervorrichtung mit einer in das Gehäuse der Maschine integrierten Kammer (1, 2, 11, 15), einem im Wesentlichen ringförmigen zylindrischen Filterelement (3) in der Kammer (1, 2, 11, 15), einem Kammerboden (2) mit einer Öffnung (17), einem das dem Kammerboden entgegengesetzte Ende der Kammer abschliessenden Deckel (4), einem zwischen der zylindrischen Aussenseite des Filterelements (3) und der peripheren Wandung (1; 15) der Kammer vorgesehenen ringförmigen Sammel- und Verteilraum (16), wobei der benannte Raum (16) mit einer Ablassöffnung (18) verbunden und gegen Fluidverlust über die axialen Enden des Filterelements durch Dichtungsringe (13 und 10) abgedichtet ist, die in Rillen aufgenommen werden, die in einer ringförmigen Abschluss-Metallkappe (8) bzw. einer Bodenabschluss-Metallkappe (7) des Filterelements ausgebildet sind, **dadurch gekennzeichnet, dass** eine aufnehmende Rille (12) in der strömungsabwärts gelegenenen ringförmigen Endkappe (8) des Filterelements (3) bezüglich der Aussenseite des Filterelements (5) radial einwärts angebracht ist und dass der entsprechende strömungsabwärts gelegene Dichtungsring (13) im Querschnitt gesehen ein im Wesentlichen V-förmiger elastischer Ring ist, der mit seinem Scheitel radial nach aussen ausgerichtet ist und mit einem ringförmigen Wandungsabschnitt (14) der Kammerwandung in Berührung steht, während das innere Ende seines strömungsaufwärts gelegenen Schenkels (13a) in der benannten Rille (12) aufgenommen ist und das freie Ende (13c) eines freien, axial elastischen Schenkels (13b) sich axial in der Richtung der Filterachse erstreckt und auf der Bodenfläche (2) der Kammer ruht.

2. Filtervorrichtung nach Anspruch 1, **dadurch gekennzeichnet, dass** der Scheitel des V-förmigen Querschnitts des Dichtungsringes (13) abgeflacht ist.

3. Filtervorrichtung nach Ansprüchen 1 bis 2, **dadurch gekennzeichnet, dass** das sich axial erstreckende Ende (13c) des axial elastischen Schenkels (13b) als ein Wulst ausgebildet ist.

4. Filtervorrichtung nach Ansprüchen 1 bis 3, **dadurch gekennzeichnet, dass** der Durchmesser des benannten ringförmigen Wandungsabschnitts (14), an dem der benannte Scheitel angreift, geringfügig kleiner als der eines ringförmigen zylindrischen Kammerwandungsabschnitts (11) am stromaufwärts gelegenen Ende des Filterelements (3) ist, wobei letzterer Wandungsabschnitt (11) mit einem O-Ring (10) zusammenwirkt.

5. Filtervorrichtung nach Anspruch 4, **dadurch gekennzeichnet, dass** die periphere Kammerwandung (bei 15) zwischen den beiden ringförmigen zylindrischen Kammerwandungsabschnitten (14 und 11) aufgeweitet und durch einen kegelförmigen verbindenden Wandungsabschnitt (15a) mit dem ringförmigen zylindrischen Kammerwandungsabschnitt (14) am strömungsabwärts gelegenen Ende des Filterelements verbunden ist.

## Revendications

1. Dispositif de filtre destiné à être utilisé dans une machine, comprenant une chambre (1, 2, 11, 15) intégrée dans le carter de la machine, un élément de filtre cylindrique (3) sensiblement annulaire dans la chambre (1, 2, 11, 15), un fond de chambre (2) avec une ouverture d'entrée (17), un couvercle (4) fermant l'extrémité opposée de la chambre vers le fond de chambre, un espace annulaire (16) de collecte et de distribution étant prévu entre la surface extérieure cylindrique de l'élément de filtre (3) et la paroi circonférentielle (1 ; 15) de la chambre, ledit espace (16) étant relié à un conduit de décharge (18) et étant étanché contre des fuites de fluide via les extrémités axiales de l'élément de filtre au moyen de joints d'étanchéité toriques (13, 10) qui sont reçus dans des rainures formées dans un capuchon d'extrémité métallique (8) en forme de bague, et un capuchon métallique d'extrémité de fond (7) respectifs de l'élément de filtre, **caractérisé en ce qu'**une rainure de réception (12) dans le capuchon d'extrémité aval en forme de bague (8) de l'élément de filtre (3) est positionnée radialement vers l'intérieur par rapport à la surface circonférentielle de l'élément de filtre (5) et **en ce que** la bague d'étanchéité aval en respective (13) est, vue en section transversale, une bague élastique sensiblement en forme de V, dont la crête est dirigée radialement vers l'extérieur, en contact avec une partie de paroi (14) en forme de bague de la paroi de chambre, et dont l'extrémité inférieure de sa branche amont (13a) est reçue dans ladite rainure (12) tandis que l'extrémité libre (13c) de la branche libre (13b), axialement élastique, s'étend axialement dans la direction de l'axe du filtre et est en appui contre la surface de fond (2) de la chambre.

2. Dispositif de filtre selon la revendication 1, **caractérisé en ce que** la crête de la section transversale en forme de V de la bague d'étanchéité (13) est aplatie.

3. Dispositif de filtre selon les revendications 1 à 2, **caractérisé en ce que** l'extrémité (13c) s'étendant axialement de la branche (13b) axialement élastique, est formée comme un bourrelet.

4. Dispositif de filtre selon les revendications 1 à 3, **caractérisé en ce que** le diamètre de ladite partie de paroi (14) en forme de paroi annulaire, en contact avec ladite crête, est légèrement inférieure à celle d'une partie de paroi (11) de chambre cylindrique de forme annulaire, à l'extrémité amont de l'élément de filtre (3), la dernière partie (11) de paroi coopérant avec une bague d'étanchéité torique (10).

5. Dispositif de filtre selon la revendication 4, **caractérisé en ce que** la chambre circonférentielle est élargie (en 15) entre les deux parties (14 et 11) de paroi de chambre cylindrique de forme annulaire et est reliée à la partie de paroi (14) de chambre cylindrique de forme annulaire, à l'extrémité aval de l'élément de filtre à travers une partie de paroi (15a) de liaison conique.
